**Europäisches Patentamt**

**European Patent Office**

**Office européen des brevets**

(19)

(11) Veröffentlichungsnummer: **0 350 514**

**A1**

(12) # EUROPÄISCHE PATENTANMELDUNG

(21) Anmeldenummer: **88111015.9**

(22) Anmeldetag: **11.07.88**

(51) Int. Cl.⁴: **A01F 15/00**

(43) Veröffentlichungstag der Anmeldung:
**17.01.90 Patentblatt 90/03**

(84) Benannte Vertragsstaaten:
**AT BE CH DE ES FR GB GR IT LI LU NL SE**

(71) Anmelder: **Maschinenfabriken Bernard Krone GmbH
Heinrich-Krone-Strasse 10
D-4441 Spelle(DE)**

(72) Erfinder: **Krone, Bernard
Bernard-Krone-Strasse 11
D-4441 Spelle(DE)**
Erfinder: **Ahler, Wilhelm
Alter Dyk 40
D-4424 Stadtlohn(DE)**

(74) Vertreter: **Busse & Busse Patentanwälte
Postfach 1226 Grosshandelsring 6
D-4500 Osnabrück(DE)**

(54) **Landwirtschaftliche Aufsammelpresse.**

(57) Eine landwirtschaftliche Aufsammelpresse dient zum Bilden von Rundballen aus Erntegut in einer zum rückseitigen Auswerfen eines fertigen Rundballens aufklappbaren, mit einem Umfangsförderer (12) und im Bodenbereich mit einer Preßwalze (20) versehenen Wickelkammer (8) und umfaßt eine Aufsammelvorrichtung, einen sich an diese anschließenden und sich bis zu einer Einlaßöffnung (22) der Wickelkammer (8) erstreckenden, in Speicherphasen des Pressenbetriebs Erntegut sammelnden Speicherraum (6) mit einem dessen Bodenfläche (28) einnehmenden Bodenförderer (29), eine Vorrichtung (40) zum wahlweisen Unterbrechen und Freigeben eines Gutüberganges vom Speicherraum (6) zur Wickelkammer (8) und eine Vorrichtung (25;26) zum Einwickeln eines fertigen Rundballens in Bindematerial in der Wickelkammer (8). Dabei ist der Speicherraum (6) als flacher Form- und Preßkanal (6) für das in Speicherphasen des Pressenbetriebs eingeförderte Erntegut ausgebildet, der bei veränderlicher Höhe einen über seine Länge im wesentlichen gleichbleibenden Querschnitt aufweist.

*Fig.1*

## Landwirtschaftliche Aufsammelpresse

Die Erfindung bezieht sich auf eine landwirtschaftliche Aufsammelpresse in einer Ausgestaltung gemäß dem Oberbegriff des Anspruchs 1.

Pressen dieser Art (DE-A-26 34 638, US-A-2 581 542 und US-A-3 004 377) ermöglichen einen kontinuierlichen Pressenbetrieb, da während des Bindens eines fertigen Rundballens bis zum Schließen der Wickelkammer nach einem Auswerfen des Rundballens beim Weiterfahren der Aufsammelpresse aufgenommenes Erntegut im Speicherraum gesammelt und anschließend in die entleerte Wickelkammer überführt werden kann. Bei den bekannten Aufsammelpressen wird dabei das Erntegut zu einer verhältnismäßig lockeren Masse rückgestaut, für die ein verhältnismäßig großer Speicherraum benötigt wird. Denn die Speicherphase beansprucht einen erheblichen Anteil des gesamten Aufsammel-, Preß- und Auswerfvorganges für einen fertigen Rundballen, so daß der Speicherraum einen entsprechenden Anteil der Gutmenge eines fertigen Rundballens aufnehmen muß.

Der Erfindung liegt die Aufgabe zugrunde, eine landwirtschaftliche Aufsammelpresse der im Oberbegriff des Anspruchs 1 angegebenen Art zu schaffen, die einen kontinuierlichen Betrieb mit geringerem Speicherraum und verlängerter Speicherphase ermöglicht.

Die Erfindung löst die Aufgabe mit den Merkmalen des Anspruchs 1. Hinsichtlich wesentlicher weiterer Ausgestaltungen wird auf die Ansprüche 2 bis 38 verwiesen.

Die erfindungsgemäße Aufsammelpresse löst die Aufgabe auf eine besonders einfache und zugleich wirksame Weise, bei der das in der Speicherphase des Pressenbetriebs aufgenommene Erntegut eine gleichmäßige Vorformung und zugleich eine hohe Verdichtung erfährt. Dadurch kann das Aufnahmevolumen des als Form- und Preßkanal ausgebildeten Speicherraumes wesentlich vermindert werden. Ferner ist das Erntegut im Anschluß an eine Speicherphase schnell, ohne Zwischenverformung und ohne Zwischenpressung in die Wickelkammer förderbar . Dabei kann je nach Bemessung des Aufnahmevolumens des Form- und Preßkanals der Zeitanteil der Speicherphase an der Gesamtdauer einer Preßballenbildung vergrößert werden.

Zahlreiche weitere Einzelheiten und Vorteile ergeben sich aus der nachfolgenden Beschreibung eines in der Zeichnung dargestellten Ausführungsbeispiels des Gegenstands der Erfindung. In der Zeichnung zeigen:

Fig. 1 eine schematische Seitendarstellung einer Aufsammelpresse nach der Erfindung bei zur Veranschaulichung der Betriebsstellung der Teile während der Erntegutaufnahme bei der Bildung eines ersten Rundballens,

Fig. 2 eine Seitendarstellung der Aufsammelpresse ähnlich Fig. 1 zur Veranschaulichung der Betriebsstellung der Teile während des ersten Teils der Speicherphase des Pressenbetriebs, während der ein fertiger Rundballen in der Wickelkammer in Bindematerial eingewickelt wird,

Fig. 3 eine Seitendarstellung der Aufsammelpresse ähnlich Fig. 2 zur Veranschaulichung der Betiebsstellung der Teile während eines an schließenden Teils der Speicherphase, während der bei aufgeklappter Wickelkammer ein fertiger Rundballen ausgeworfen wird,

Fig. 4 eine Seitendarstellung der Aufsammelpresse ähnlich Fig. 3 zur Veranschaulichung der Betriebsstellung der Teile unmittelbar nach Abschluß der Speicherphase und während des Überführens der während der Speicherphase im Form- und Preßkanal geformten und gepreßten Erntegutmenge in den Wickelraum,

Fig. 5 eine abgebrochene Ausschnittvergrößerung des Speicherraumbereiches der Aufsammelpresse in Seitendarstellung,

Fig. 6 eine vereinfachte, schematische Draufsicht zu Fig. 5,

Fig. 7 eine abgebrochene schematische Grundrißdarstellung der angetriebenen Aggregate der Aufsammelpresse zur Veranschaulichung der Antriebsmittel für diese,

Fig. 8 eine Teildraufsicht ähnlich Fig. 7 auf die in Fig. 7 oben dargestellten in Fahrtrichtung rechtsseitigen Antriebsmittel der Aufsammelpresse in Vergrößerung,

Fig. 9 eine Teildraufsicht ähnlich Fig. 8 auf die in Fig. 7 unten dargestellten, in Fahrtrichtung linksseitigen Antriebsmittel der Aufsammelpresse in Vergrößerung,

Fig. 10 eine schematische Ansicht der Aufsammelpresse zur Veranschaulichung der in Fahrtrichtung linksseitigen Antriebsmittel in Seitenansicht,

Fig. 11 eine schematische Ansicht der Aufsammelpresse zur Veranschaulichung der in Fahrtrichtung rechtsseitigen Antriebsmittel in Seitenansicht,

Fig. 12 eine vergrößerte Stirnansicht des in Fahrtrichtung der Aufsammelpresse linksseitigen, auf dem Ende der Antriebswelle des Bodenförderers angeordneten Kettenrades in Richtung des Pfeiles XII-XII in Fig. 9, und

Fig. 13 eine schematische Darstellung der hydraulischen Schalt- und Stellvorrichtung für die Zugdeichsel der Aufsammelpresse nach der Erfindung.

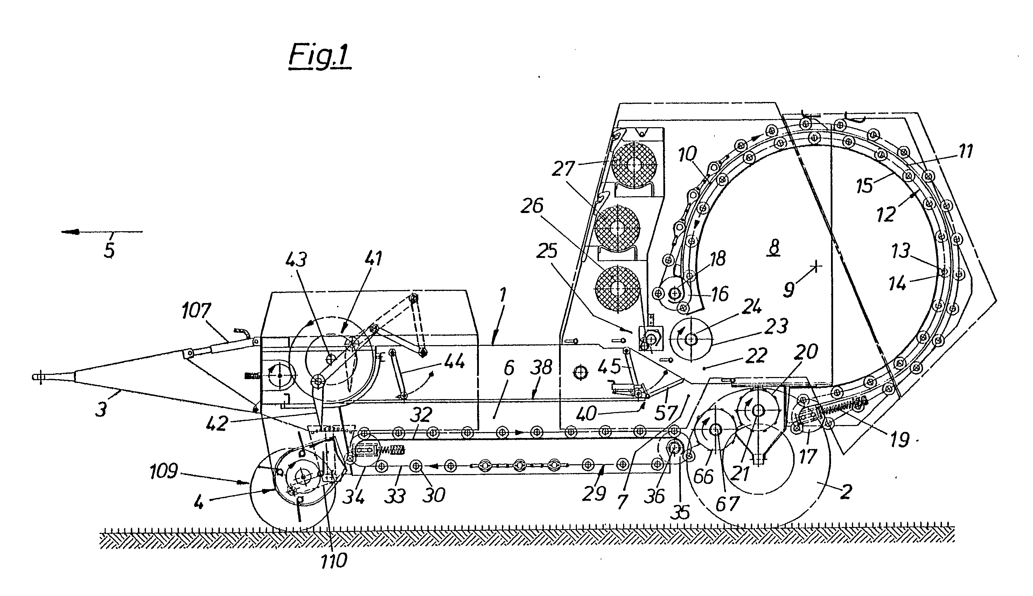

Die in den Fig. 1 bis 4 in verschiedenen Betriebsstellungen ihrer Teile veranschaulichte Aufsammelpresse umfaßt im einzelnen ein Maschinengestell 1, das sich über Laufräder 2 auf dem Boden abstützt und mittels einer Deichsel 3 an ein Zugfahrzeug, z.B. einen landwirtschaftlichen Schlepper, anhängbar ist.

Das Maschinen- und zugleich Fahrgestell 1 der Aufsammelpresse stützt im vorderen Pressenbereich eine Aufsammelvorrichtung 4, bei dem dargestellten Ausführungsbeispiel eine sogenannte Pickup-Trommel, ab, an die sich rückwärts entgegen der Fahrtrichtung 5 ein Speicherraum 6 anschließt. Dieser Speicherraum 6 geht mit einem Übergangsbereich 7 an seinem rückwärtigen Ende in eine Wickelkammer 8 über, die als im wesentlichen zylindrischer Raum mit horizontaler, quer zur Fahrtrichtung verlaufender Mittelachse 9 ausgebildet ist.

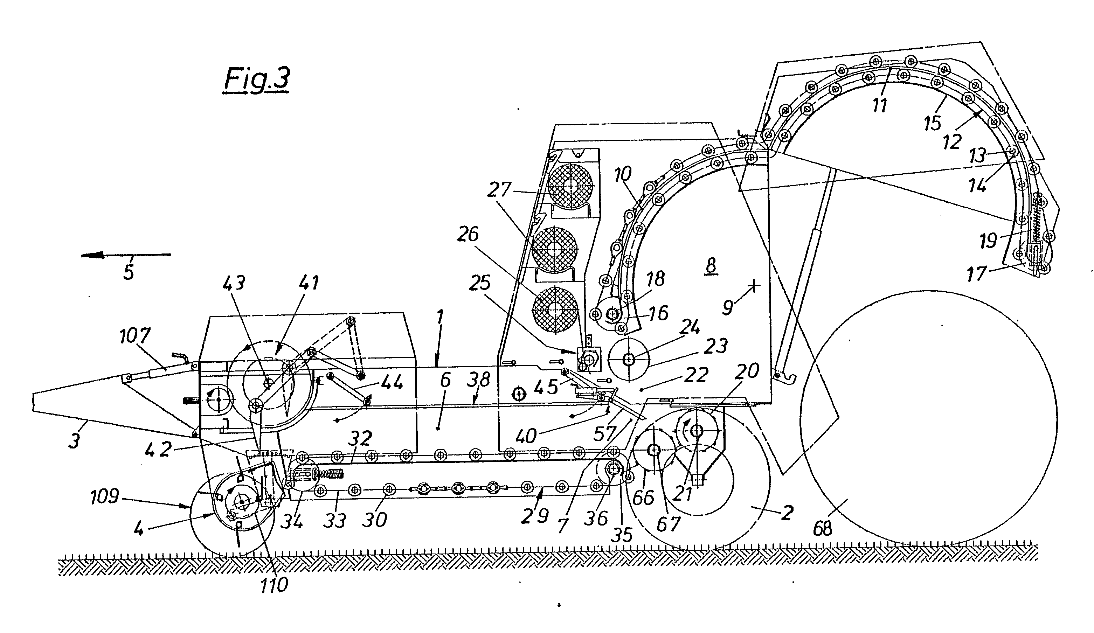

Die Wickelkammer 8 wird am Umfang begrenzt durch eine feste zylindrische Begrenzungswand 10,11, deren Teil 10 fest mit dem Maschinengestell 1 verbunden ist und deren Teil 11 klappbar angelenkt und in die in Fig. 3 dargestellte aufgeklappte Stellung hochklappbar ist. Die Begrenzungswand 10,11 wird von einem Stabkettenförderer 12 umlaufen, dessen Querstäbe 13 an ihren Enden Führungsrollen 14 tragen, welche im Innern der Wickelkammer 8 auf einer Führungsbahn 15 laufen und welche außerhalb der Wickelkammer 8 auf der Außenseite der Begrenzungswand 10,11 zurückgeführt werden.

In den beiden Umlenkungsbereichen umläuft der Stabkettenförderer 12 Umlenkräder 16,17, von denen die Umlenkräder 16 Antriebskettenräder bilden und auf einer Antriebswelle 18 befestigt sind. Die Umlenkräder 17 bilden Spannkettenräder, die unter Vorlast einer Spannfeder 19 stehen und entlang einem Spannweg begrenzt verschieblich abgestützt sind.

Im Bodenbereich wird die Wickelkammer 8 von einer Preßwalze 20 mitbegrenzt, die den Umlenkrädern 17 vorgeordnet ist und eine Antriebswelle 21 aufweist. Diese Preßwalze 20 begrenzt unterseitig eine Einlaßöffnung 22 der Wickelkammer (8), die bei dem dargestellten Ausführungsbeispiel oberseitig durch eine angetrieben umlaufende Abweisförderwalze 23 mit Antriebswelle 24 begrenzt wird.

Eine derartige Ausgestaltung des Wickelkammerteils einer Aufsammelpresse ist in nahezu allen wesentlichen Einzelheiten bekannt, und z.B. der DE-A-27 44 548 entnehmbar.

Vor der Wickelkammer 8 ist dieser eine Bindevorrichtung 25 vorgeordnet, mit deren Hilfe Bindematerial in die Einlaßöffnung 22 der Wickelkammer 8 einführbar ist. Bei dem dargestellten Beispiel und generell bevorzugt findet als Bindematerial eine Hüllbahn in Netzform Verwendung, die von einer Vorratsrolle 26 abgewickelt wird. Reservevorratsrollen sind bei 27 angedeutet. Für die Bindevorrichtung kann jede Ausgestaltung gewählt werden, die wie dargestellt platzsparend baut und funktionstüchtig ist. Eine bevorzugte Ausbildung einer solchen Bindevorrichtung ist in der DE-A-33 22 024 näher veranschaulicht und beschrieben.

Anstelle der dargestellten und bevorzugten Konstruktion des Wickelkammerteils der Aufsammelpresse kann grundsätzlich auch ein Wickelkammerteil einer anderen konstruktiven Ausbildung und Wirkungsweise Anwendung finden, sofern dieser nur geeignet ist, Rundballen zu bilden. Insbesondere können Wickelkammerteile Anwendung finden, bei denen anstelle des Stabkettenförderers 12 und der mit diesem zusammenwir kenden festen Begrenzungswand 10,11 andere Umfangsförderer die Förderfunktion und die Begrenzung einer Wickelkammer mit konstantem Volumen übernehmen. Beispielsweise sei hierzu auf die DE-A-24 43 838 verwiesen.

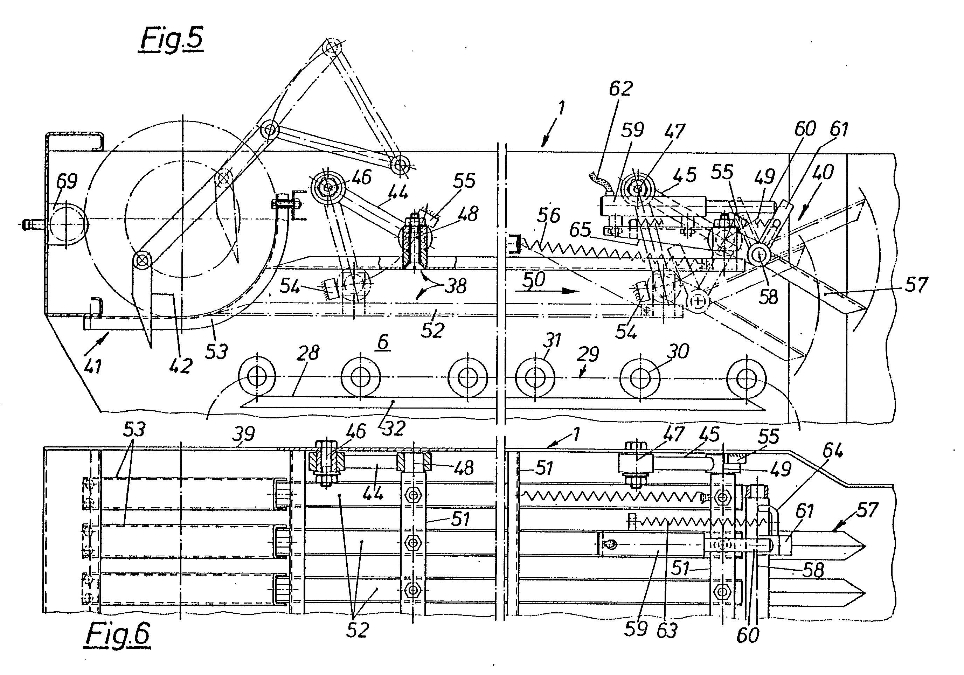

Wie den Fig. 1 bis 4, insbesondere aber den Fig. 5 und 6 näher entnommen werden kann, wird der Speicherraum 6 im Speicherteil der Aufsammelvorrichtung - der eine selbständige und mit unterschiedlichen Wickelkammerteilen kombinierbare Baueinheit bilden kann - an seiner Unterseite begrenzt von einem die Bodenfläche 28 einnehmenden bzw. überlaufenden Bodenförderer 29, der wie der Umfangsförderer 12 der Wickelkammer 8 als rollengeführter Stabkettenförderer ausgebildet ist. Die auf über die Förderbreite vorstehenden Enden der Querstäbe 30 des Stabkettenförderers 29 gelagerten Rollen 31 überlaufen im Bereich des Fördertrums des Bodenförderers (29) Führungsschienen oder eine geschlossene Bodenwand 32. Die umlaufenden außenseitigen Ketten 33 umlaufen Umlenkräderpaare 34,35, von denen die der Aufsammelvorrichtung 4 benachbarten Umlenkräder 34 als federbelastete Kettenspannräder und die dem Wickelraum 8 benachbarten Umlenkräder 35 als Kettenantriebsräder ausgebildet sind. Die Kettenantriebsräder 35 sind dabei auf einer gemeinsamen Antriebswelle 36 angebracht.

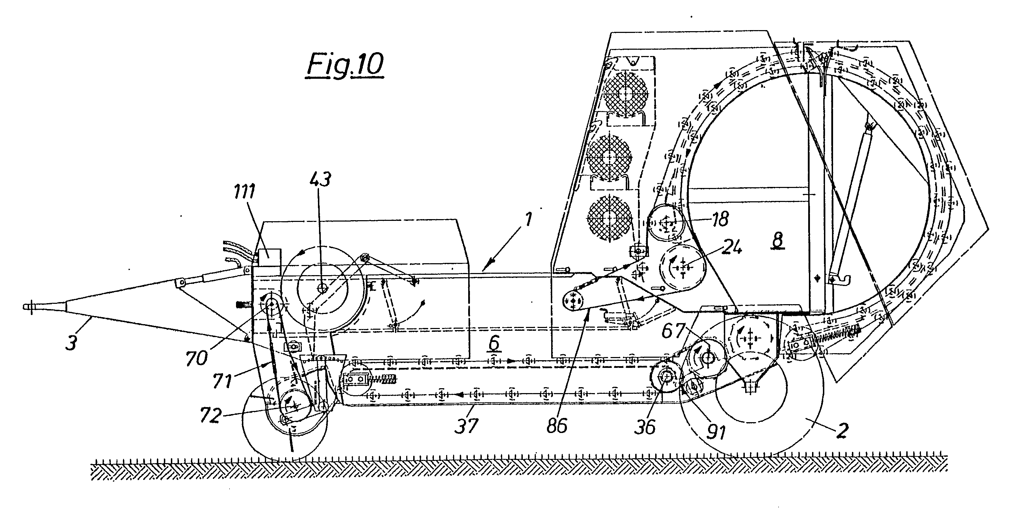

Unter dem Bodenförderer 29 kann, wie dies in Fig. 10 veranschaulicht ist, eine geschlossene Bodenwanne 37 angeordnet sein, die von den Querstäben des Bodenförderers 29 im Rücklauftrum überlaufen wird und der Rückführung von Bröckelverlusten in den Einlaufbereich des Speicherraumes dient. Die Bodenwanne 37 ist hierzu bevorzugt an ihrem vorderen Ende bis über die Umlenkräder 34 und an ihrem rückwärtigen Ende bis über die Preßwalze 20 der Wickelkammer 8 hinaus vorgezogen.

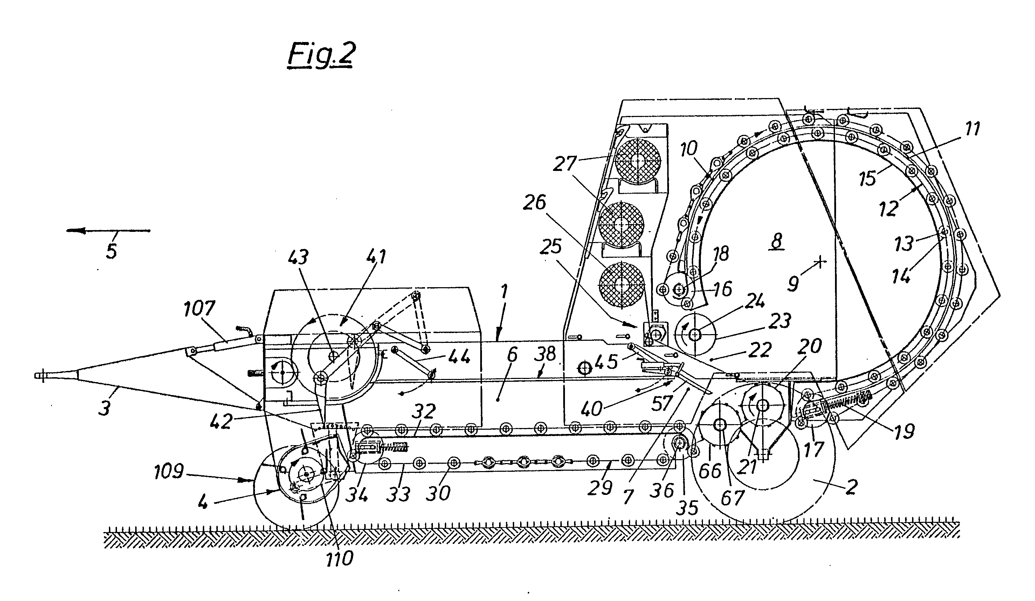

Der unterseitig durch den Bodenförderer 29 gegebenenfalls in Verbindung mit der Bodenwand 32 begrenzte Speicherraum 6 bildet einen flachen Form- und Preßkanal für in Speicherphasen des Pressensbetriebs eingefördertes Erntegut, der bei veränderlicher Höhe eine über seine Länge im wesent lichen gleichbleibende Querschnittsform aufweist. Hierzu sieht eine bevorzugte Ausführung vor, daß der Speicherraum 6 oberseitig von einem Niederhalter 38 begrenzt ist, der dem Bodenförderer 29 parallel im Abstand gegenüberliegt und gegen eine Rückstellkraft aus einer unteren Ausgangsstellung in eine obere Endstellung parallelbeweglich abgestützt ist. Die untere Ausgangsstellung ist in Fig. 1 und die obere Endstellung in den Fig. 2 bis 4 veranschaulicht, und die Fig. 5 zeigt den Niederhalter 38 in strichpunktierter Darstellung in seiner unteren Ausgangsstellung und in ausgezogener Darstellung in seiner oberen Endstellung. Als seitliche Begrenzung für den Form- und Preßkanal 6 können Seitenwände 39 des Maschinengestells 1 dienen, jedoch ist auch denkbar, gesonderte Seitenteile vorzusehen.

Im Übergangsbereich 7 vom Speicherraum 6 zur Wickelkammer 8 ist eine Vorrichtung 40 zum wahlweisen Unterbrechen und Freigeben eines Gutüberganges vom Speicherraum 6 zur Wickelkammer 8 vorgesehen. Ferner ist dem Speicherraum 6 an seinem Einlaßende ein Einschubförderer 41 in Gestalt eines Schwingkolbenförderers zugeordnet, dessen rechenförmiger Förderkolben 42 bei seinem Förderhub eine im wesentlichen horizontale Schubbewegung ausführt und durch diese Erntegut von der Aufsammelvorrichtung 4 in das Einlaßende des Speicherraumes 6 einschiebt, bevor er sich im Zuge einer anschließenden Aufwärtsbewegung nach oben hin aus dem Speicherraum 6 herausbewegt und in eine Stellung zurückkehrt, an der Förderhub erneut beginnt. Ausbildung und Steuerung derartiger Schwingkolbenförderer 41 sind hinlänglich bekannt und bedürfen hier keiner näheren Erläuterungen. Seinen Antrieb erfährt der Schwingkolbenförderer 41 durch einen Antriebswelle 43.

Wie insbesondere wieder den Fig. 5 und 6 entnommen werden kann, ist der Niederhalter 38 an Paaren von Parallellenkern 44,45 aufgehängt, die bei 46,47 gelenkig am Maschinengestell 1 bzw. dessen Seitenwänden 39 angreifen. An ihren jeweils anderen Enden sind die Parallellenker 44,45 jeweils bei 48,49 an der Oberseite des Niederhalters 38 angelenkt.

Der Niederhalter 38 weist eine Anzahl von parallel zur Förderrichtung 50 des Erntegutes im Speicherraum 6 ausgerichtete, im Abstand horizontal nebeneinander angeordnete und durch Querstreben 51 zu einer Baueinheit verbundene Längsschienen 52 als Begrenzungselemente auf, deren vorderen Enden zwischen gebogene Abstreiferschienen 53 zwischengreifen, die Bestandteil des Einschubförderers 41 und dessen Förderkolben 42 zugeordnet sind.

Die Ausgangs- und die Endstellung des Niederhalters 38 ist durch Anschläge 54 bzw. 55 definiert, die zweckmäßig im Schwenkbereich der Parallellenker 44,45 an der Innenseite der Seitenwände 39 des Maschinengestells 1 angebracht sind. Der Niederhalter 38 ist dabei nicht nur durch die auf ihn einwirkende Schwerkraft, sondern durch eine besondere Rückstellkraft bestrebt, seine Ausgangsstellung einzunehmen. Diese besondere Rückstellkraft wird von einem Kraftspeicher erzeugt, der von in ihrer Zugkraftwirkung einstellbar abgestützten Zugfedern 56 gebildet ist.

Die Trennvorrichtung 40 zum wahlweisen Unterbrechen und Freigeben des Gutüberganges vom Speicherraum 6 zur Wickelkammer 8 wird bevorzugt von einem klappbar abgestützten Verschlußrechen 57 gebildet, der am wickelkammerseitigen Ende des Niederhaltes 38 an diesem um eine horizontale Querachse 58 begrenzt schwenkbar gelagert ist, welche eine Anordnung nahe der Unterseite des Niederhalters 38 hat. Der Verschlußrechen 57 ist in Fig. 5 sowohl in Schließals auch in Freigabestellung veranschaulicht, und zwar sowohl bei in Ausgangs- als auch in Endstellung veranschaulichtem Niederhalter 38.

Zur Verschwenkung des Verschlußrechens 57 aus seiner Freigabestellung in seine Schließstellung ist ein Kraftheber 59 vergesehen, der als Hydraulikzylinder ausgebildet ist und mit seiner Kolbenstange 60 auf einen Hebel 61 am Verschlußrechen 57 einwirkt. Dieser hydraulische Kraftheber 59 bildet zugleich die Arretierung des Verschlußrechens 57 in dessen Schließstellung, wobei diese Arretierung bevorzugt mit einer die Schließkraft begrenzenden Überlastsiche rung vereinigt ist. Konstruktiv ist dies leicht durch die Ausbildung des Absperrventils für die hydraulische Zulaufleitung 62 zum Kraftheber 59 als einstellbares Überlastventil lösen. In seine Freigabestellung wird der Verschlußrechen 57 bevorzugt durch einen Kraftspeicher zurückgeführt, der als Zugfeder ausgebildet ist und an einem Hebelteil 64 des Verschlußrechens 57 angreift. Kraftheber 59 und Kraftspeicher 63 sind dabei auf einem an der Oberseite des Niederhalters 38 angebrachten Konsolträger 65 abgestützt.

Wie insbesondere der Fig.5 entnommen werden kann, schließt der Verschlußrechen 57 in seiner Schließstellung mit der Unterseite des Niederhalters 38 einen stumpfen Winkel von weniger als 180° und in seiner Freigabestellung mit der Unterseite des Niederhalters 38 einen stumpfen Winkel von mehr als 180° ein, wobei der Schwenkwinkel in der Größenordnung von etwa 60° liegt. Dabei reicht der Verschlußrechen 57 in seiner Schließstellung mit den freien Enden seiner Rechenzinken bis nahe an den Bodenförderer 29 heran, wenn sich der Niederhalter 38 in seiner Ausgangsstellung befindet. In der Endstellung des Niederhalters erstrecken sich die freien Enden der Rechenzinken des Verschlußrechens 57 nahe an einen Übergangsförderer 66 heran, der zwischen dem der Wickelkammer 8 zugewandten Ende des Bodenförderers 29 des Speicherraumes 6 und der Preßwalze 20 der Wickelkammer 8 angeordnet und von einer Förderwalze 66 mit Antriebswelle 67 gebildet ist. Die Förderwalze 66 ist der Preßwalze 20 im Abstand parallel und höhenvermindert vorgeordnet und läuft um eine zur Drehachse der Preßwalze 20 parallele Drehachse um. Die Förderwalze 66 prägt der Förderrichtung des Erntegutes einen Schräganstieg von der tiefer gelegenen Bodenebene des Speicherraumes 6 zur Einlaßöffnung 22 der Wickelkammer 8 auf. Um zu vermeiden, daß der Verschlußrechen 57 in seiner Freigabestellung den Förderfluß des Erntegutes im Übergangsbereich beeinträchtigt, ist er in der Freigabestellung annähernd parallel zur Förderrichtung des Erntegutes im Übergangsbereich 7 ausgerichtet.

Im Pressenbetrieb bilden die Aufsammelvorrichtung 4, der Einschubförderer 41 am Einlaßende des Speicherraumes 6 und die Preßwalze 20 der Wickelkammer ständig angetriebene ·Förderer. Der Bodenförderer 29 und der Übergangsförderer 66 haben hingegen einen mit dem Beginn des Einwikkelns des fertigen Rundballens in das Bindematerial gemeinsam ausschaltbaren und unmittelbar vor dem Schließen der Wickelkammer 8 nach einem Auswerfen eines gebundenen Rundballens 68 gemeinsam wieder einschaltbaren Antrieb. Der Umfangsförderer 12 der Wickelkammer hat dagegen einen unmittelbar beim oder nach dem Beginn des Öffnens der Wickelkammer 8 ab- und unmittelbar vor dem Schließen der Wickelkammer 8 wieder einschaltbaren Antrieb.

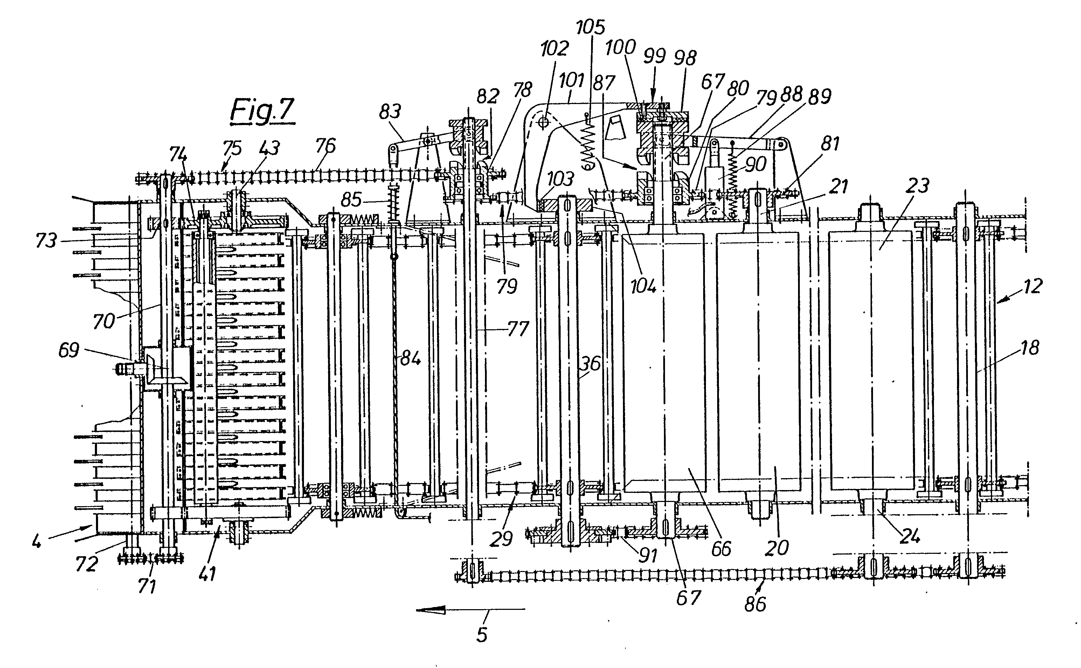

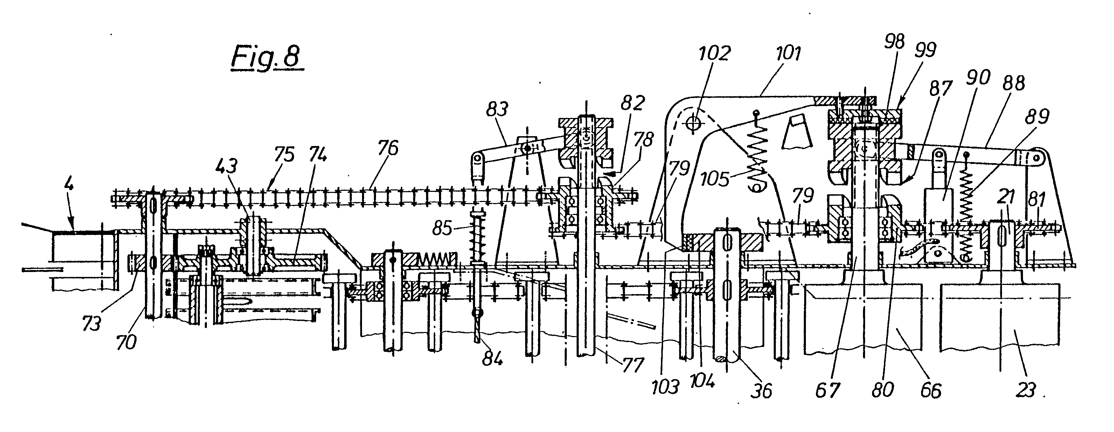

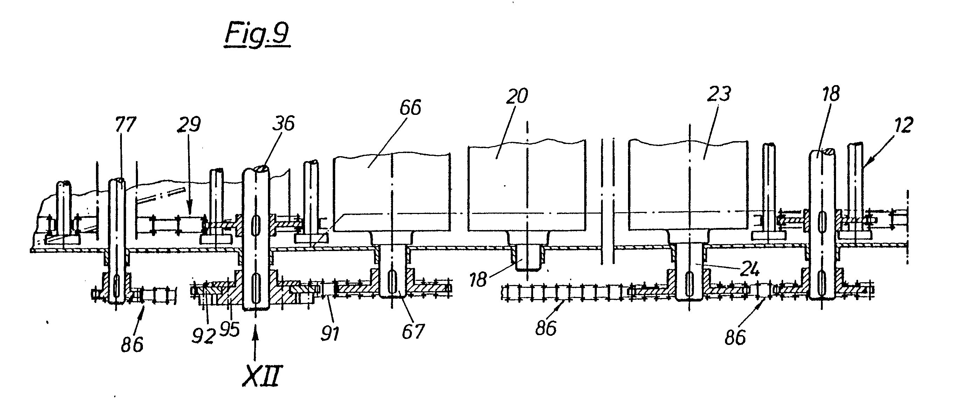

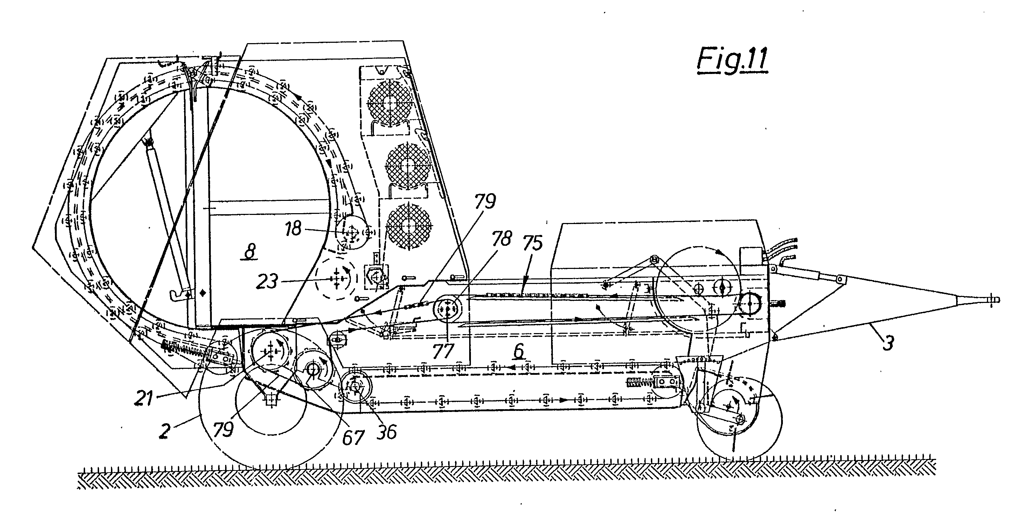

Die Antriebsverhältnisse sind in den Fig. 7 bis 11 näher veranschaulicht. Wie insbesondere der Fig. 7 entnommen werden kann, weist die Aufsammelpresse eine vordere zentrale, mit der Zapfwelle eines Zugfahrzeugs über ein Getriebe 69 kuppelbare Antriebswelle 70 auf, die an ihrem in Fahrtrichtung 5 linksseitigen Ende über einen Kettentrieb 71 die Antriebswelle 72 der Aufsammelvorrichtung 4 antreibt. Der Schwingkolbenförderer 41 wird von einem Getrieberad 73 auf der zentralen Antriebswelle 70 über ein Getrieberad 74 auf der Antriebswelle 43 des Schwingkolbenförderers 41 angetrieben.

Vom anderen Ende der zentralen Antriebswelle 70 geht ein Kettentrieb 75 aus, dessen Kette 76 das erste Kettenrad eines frei drehbar auf einer Zwischenantriebswelle 77 gelagerten Doppelkettenrades 78 umläuft. Das zweite Kettenrad des Doppelkettenrades 78 treibt mittels einer Antriebskette 79 ein Kettenrad 80, das frei drehbar auf der Antriebswelle 67 des Übergangsförderers 66 gelagert ist, sowie ein Kettenrad 81 auf der Antriebswelle 21 der Preßwalze 20. Dementsprechend sind bei Antriebsbeaufschlagung des Getriebes 69 die Aggregate 4,41 und 20 ständig angetrieben.

Das Doppelkettenrad 78 ist über eine Kupplung 82 mit der Antriebszwischenwelle 77 in Antriebsverbindung bringbar. Diese Kupplung 87 weist ein auf der Antriebszwischenwelle 77 längs einer Vielkeilverbindung verschiebliches Kupplungs stück auf, das mittels eines Hebels 83 betätigbar ist, an dem ein Zugseil 84 angreift. Eine Rückstellfeder 85 ist bestrebt, die Kupplung 82 in Kupplungseingriff mit dem Doppelkettenrad 78 zu bewegen. Auf diese Weise steht normalerweise die Antriebszwischenwelle 77 in Antriebsverbindung mit dem Kettentrieb 75 und treibt ihrerseits über einen Kettentrieb 86 die Antriebswelle 18 des Umfangsförderers 12 sowie die Antriebswelle 24 der Abweisförderwalze 23. Diese beiden Aggregate 12,23 werden unmittelbar bei oder nach Beginn der Öffnungsbewegung des klappbaren Teils der Wickelkammer 8 durch eine damit einhergehende Betätigung des Zugseils 84 von ihrer Antriebsverbindung getrennt.

Sobald der klappbare Teil der Wickelkammer 8 wieder die Schließstellung erreicht bzw. sich dieser annähernd, bewirkt die Rückstellfeder 85 infolge Nachlassen des Zuges im Zugseil 84 das Einrükken der Kupplung 81, wodurch die Aggregate 12,23 wieder angetrieben werden.

Für den Antrieb des Übergangsförderers 66 wird mittels einer Kupplung 87, die ein längs einer Vielkeilverbindung auf der Antriebswelle 67 verschiebliches Kupplungsstück umfaßt, die Antriebswelle 67 mit dem angetriebenen Kettenrad 80 gekuppelt. Dies wird über einen Hebel 88 durch die Wirkung einer Zugfeder 89 herbeigeführt, während die Auskupplung durch einen fernbedienbaren hydraulischen Kraftheber 90 erfolgt, der entgegen der Wirkung der Zugfeder 89 bei seiner Betätigung die Kupplung 87 öffnet.

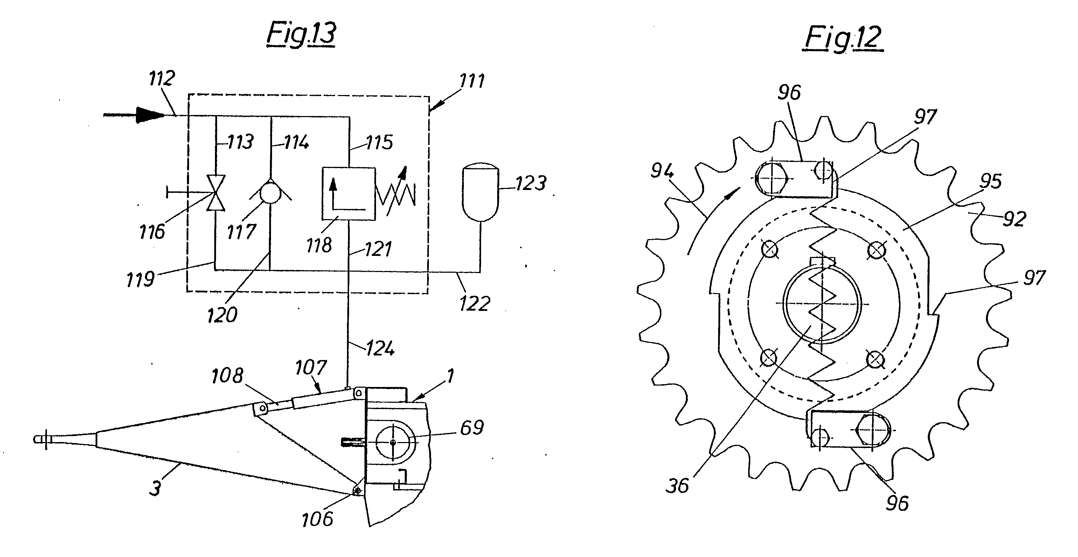

Das in Fahrtrichtung 5 linksseitige Ende der Antriebswelle 67 des Übergangsförderers 66 steht über einen Kettentrieb 91 mit der Antriebswelle 36 des Bodenförderers 29 in Antriebsverbindung. Der Kettentrieb 91 umfaßt dabei ein auf dem in Fahrtrichtung 5 linksseitigen Ende der Antriebswelle 36 angeordnetes Kettenrad 92, das in Fig. 12 näher veranschaulicht ist. Dieses Kettenrad 92 steht für eine Drehbewegung in Richtung des Pfeiles 94 mit einem fest auf der Antriebswelle 36 angeordneten Nabenteil 95 in Antriebsverbindung über Mitnehmerklinken 96, die Rastausnehmungen 97 des Nabenteils 95 hintergreifen. Bei Stillstand des Kettenrades 92 kann sich jedoch die Antriebswelle 36 in Richtung des Pfeiles 94 weiterdrehen, da dabei die Mitnehmerklinken 96 als Freilauf wirken. Dies stellt sicher, daß nach Abschalten des Antriebs für den Übergangsförderer 66 und damit für den Bodenförderer 29 der Bodenförderer 29 eine durch in den Speicherraum eingefördertes Erntegut bewirkte Mitnahmebewegung in Förderrichtung ausführen kann.

Bei Ausrücken der Kupplung 87 durch Betätigung des hydraulischen Krafthebers 90 gelangt deren längs einer Vielkeilverbindung auf der Antriebswelle 67 verschieblich geführtes Kupplungsstück in Bremseingriff mit einem unverdrehbar, jedoch pendelnd auf der Antriebswelle 67 angeordneten Druckplatte 98 einer Bremsvorrichtung 99, welche die Druckplatte 98 als Gegenkörper zu einem Bremskörper 100 umfaßt, der auf dem verschiebbaren Kupplungsstück der Kupplung 87 angebracht ist.

Die Druckplatte 98 der Bremsvorrichtung 99 erhält in Bremseingriff mit dem Bremskörper 100 des verschiebbaren Kupplungsstücks der Kupplung 87 eine radiale Ausrichtung und betätigt dadurch einen Schwenkhebel 101, der um eine Gelenkachse 102 schwenkbar ist und an seinem anderen Ende eine Bremsbacke 103 trägt. Durch das Verschwenken des Hebels 101 in Fig. 7 im Gegenuhrzeigersinn wird die Bremsbacke 103 an einen Bremszylinder 104 angelegt, der auf dem in Fahrtrichtung 5 rechtsseitigen Ende der Antriebswelle 36 für den Bodenförderer 29 angebracht ist. Dementsprechend erfährt der Bodenförderer 29 unmittelbar nach Abschaltung seines Antriebs eine Abbremsung, durch die sich die Verdichtung von Erntegut im Form- und Preßkanal 6 während der Speicherphase des Pressenbetriebs erhöht. Bei Umschalten der Kupplung 87 zieht eine Rückstellfeder 105 den Schwenkhebel 101 wieder in eine Ausgangsstellung zurück, in der die Wirkung der Bremsvorrichtung 103,104 aufgehoben ist.

Die Aufsammelvorrichtung 4 ist fest mit dem Maschinengestell 1 der Aufsammelpresse verbunden, wodurch ein sicherer Gutübergang von der Aufsammelvorrichtung 4 zum Speicherraum 6 unter Mitwirkung des Schwingkolbenförderers 41 gegeben ist, da alle Teile in gleicher Zuordnung zueinander verbleiben. Zur Bodenanpassung der Aufsammelvorrichtung an Bodenunebenheiten muß daher das in Fahrtrichtung 5 vordere Ende der Aufsammelpresse in Abhängigkeit von Bodenunebenheiten angehoben bzw. abgesenkt werden, um stets einen optimalen Bodenguteingriff der Aufnahmezinken der Aufnahmevorrichtung 4 sicherzustellen.

Hierzu sieht die Erfindung vor, daß die Zugdeichsel 3 mit dem vorderen Ende des Maschinengestells 1 um eine horizontale Querachse 106 schwenkbar verbunden und mittels eines hydraulischen Stellantriebs 107 auf und ab schwenkbar abgestützt ist. Bei Ausfahren der Kolbenstange 108 des hydraulischen Stellantriebs 107 wird das in Fahrtrichtung 5 vordere Ende der über die Zugdeichsel 3 an ein Zugfahrzeug angehängten Aufsammelpresse angehoben und bei Einfahren dementsprechend abgesenkt.

Zur Steuerung von Schwenkverstellungen der Zugdeichsel 3 ist im Bereich der Aufsammelvorrichtung 4 eine Tastvorrichtung vorgesehen, die von zwei beidseits der Aufnahmevorrichtung 4 angeordneten Tasträdern 109 gebildet ist, die an Winkelhebeln 110 abgestützt sind.

Der Druckraum des hydraulischen Stellantriebs 107 ist an eine hydraulische Steuervorrichtung 111 angeschlossen. Diese umfaßt im einzelnen eine Einlaßleitung 112, die an die Schlepperhydraulik anschließbar ist. Die Leitung 112 verzweigt sich in die Teilleitungen 113,114 und 115, in die ein Hand-Absperrventil 116 zur Entlüftung des Systems für ein Abstellen der Aufsammelpresse mit abgesenkter Zugdeichsel, ein Rückschlagventil 117 bzw. ein einstellbares Überdruckventil 118 eingeschaltet ist. Die von den Organen 116, 117 bzw. 118 fortführenden Zweigleitungen 119, 120 und 121 vereinigen sich in einer Leitung 122, an die ein hydraulischer Druckspeicher 123 angeschlossen ist. Von der Leitung 122 zweigt die Zuleitung 124 zum hydraulischen Stellantrieb 107 ab.

Zur Vorbereitung des Betriebs wird das hydraulische System von der Hydraulik des Zugfahrzeugs mit einem Druck beaufschlagt, der einen gewünschten Druck, der einem von den Tasträdern 109 im Normalbetrieb als Anteil der Abstützkräfte des vorderen Endes der Aufsammelpresse entsprechenden Druck übersteigt. Dann wird nach Umschalten des Steuerventils der Hydraulik des Zugfahrzeugs durch das Überdruckventil 118 jener Druck eingestellt, bei dem die Tasträder den gewünschten Anteil der Abstützkräfte im vorderen Pressenbereich übernehmen und durch das Überdruckventil 118 gehalten.

Sinkt der von den Tasträdern übernommene Anteil der Stützkräfte, wie das bei Einlaufen der Tasträder 109 in eine Bodenvertiefung der Fall ist, dann erfolgt eine Verdrängung von Hydraulikmedium aus dem Stellantrieb 107 in den hydraulischen, wie eine Feder wirkenden Druckspeicher 123 mit der Folge, daß der hydraulische Stellantrieb 107 eine Einfahrbewegung ausführt und sich das vordere Ende der Aufsammelpresse absenkt.

Steigt hingegen, wie das bei einem Auflaufen der Tasträder 109 auf Bodenerhebungen der Fall ist, der von den Tasträdern 109 übernommene Anteil der Stützkräfte vorübergehend an, so mindert sich der auf den Stellantrieb 107 von der Zugdeichsel 3 rückwirkende und es wird Hydraulikmedium aus dem Druckspeicher 123 in den Stellantrieb 107 überführt mit der Folge, daß der hydraulische Stellantrieb 107 eine Ausfahrbewegung ausführt und durch Herabschwenken der Deichsel 3 das vordere Ende der Aufsammelpresse angehoben wird.

Im übrigen kann mittels der Hydraulik des Zugfahrzeugs für Wendevorgänge und Transportfahrten das vordere Pressenende voll angehoben und dadurch die Aufsammelvorrichtung 4 ohne besonderen Aufzug ausgehoben werden.

Im Betrieb der Aufsammelpresse befindet sich zu Beginn eines Aufsammel- und Preßvorganges, mit dem eine Erstbefüllung der Aufsammelpresse mit Erntegut erfolgt, der Niederhalter in seiner in Fig. 1 veranschaulichten unteren Ausgangsstellung und der Verschlußrechen 87 in Freigabestellung. Die Aufsammelvorrichtung 4 nimmt Erntegut vom Boden auf, das dann vom Schwingkolbenförderer 41 in den Einlaß des Form- und Preßkanals 6 eingeschoben wird. In diesem übernimmt der Bodenförderer 29 die Weiterförderung des Erntegutes, das im Übergangsbereich 7 eine ansteigende Förderrichtung erhält, in diesem durch den Übergangsförderer 66 weitergefördert wird und schließlich in die Wickelkammer 8 gelangt, in der das Erntegut in eine Umwälzbewegung versetzt wird.

Sobald sich in der Wickelkammer 8 ein fertiger Rundballen gebildet hat, was durch Drucküberwachung ermittelt wird, wird zunächst bei noch fortgesetztem Antrieb aller Förderer der Aufsammelpresse die Bindevorrichtung 25 gestartet und ein Vorlaufende des Bindematerials in den in die Wickelkammer 7 übertretenden Gutstrom eingeführt, das von diesem erfaßt und mitgenommen wird. Nach dieser Startphase für den Einwickelvorgang wird der Antrieb für den Bodenförderer 29 und den Übergangsförderer 66 abgeschaltet und der Verschlußrechen 57 aus seiner Freigabestellung in die in Fig. 2 veranschaulichte Schließstellung geklappt.

Infolge des ohne Unterbrechung fortgesetzten Aufsammeln von Erntegut und Einschiebens dieses Erntegutes in das Einlaßende des Form- und Preßkanals 6 wird das Erntegut fortschreitend verdichtet. Infolge des starken Einpreßdruckes, den der Schwingkolbenförderer 41 ausübt, bewegt sich trotz Abbremsung der Bodenförderer 29 in seiner Förderrichtung langsam weiter, so daß sich der Form- und Preßkanal 6 nach und nach mit bereits erheblich verdichtetem Erntegut füllt. Bei weiterem Einfördern von Erntegut weicht schließlich infolge ansteigenden Drucks im Preß- und Formkanal 6 der Niederhalter 38 aus seiner unteren Ausgangsstellung aus und gelangt schließlich in seine obere Endstellung, in der er durch die Anschläge 55 fixiert ist. Der durch die Verlagerung des Niederhalters 38 in der Höhe vergrößerte Form- und Preßkanal 6 wird auch danach noch weiter mit Erntegut befüllt, dessen Verdichtung nunmehr stark ansteigt.

Parallel zur Bildung eines hochverdichteten Gutpaketes in der Form eines flachen Quaders im Form- und Preßkanal 6 erfolgte in der Wickelkammer 8 ein Einwickeln des Rundballens in das von der Vorratsrolle 26 abgezogene Bindematerial, danach ein Abschneiden des Bindematerials und schließlich ein Auswerfen des gebundenen Rundballen 68 aus der Wickelkammer 8. Dieses Stadium zeigt Fig. 3.

Unmittelbar mit dem Hochklappen des klappbaren Teils der Wickelkammer 8 ist dabei durch die Kupplung 82 die Antriebsverbindung des Kettentriebs 75 mit der Zwischenantriebswelle 77 und damit der Antrieb über den Kettentrieb 86 zum Umfangsförderer 12 und zur Abweisförderwalze 23 unterbrochen worden. Sobald der klappbare Teil des Wickelkammer 8 seine Schließstellung wieder erreicht hat oder kurz vor deren Erreichen steht, wird über die Kupplung 82 der Antrieb der Förderer 12,23 wieder eingeschaltet.

Zugleich damit wird der hydraulische Stellantrieb 59 entlüftet, wodurch der Verschlußrechen 57 durch seinen Kraftspeicher 63 in seine Freigabestellung geschwenkt wird. Gleichzeitig wird durch Entlüften des hydraulischen Stellantriebs 90 die Kupplung 87 unter Lösen der Bremsvorrichtungen 99 und 103,104 in Kupplungseingriff mit dem Kettenrad 80 gebracht mit der Folge, daß der Bodenförderer 29 und der Übergangsförderer 66 wieder angetrieben werden.

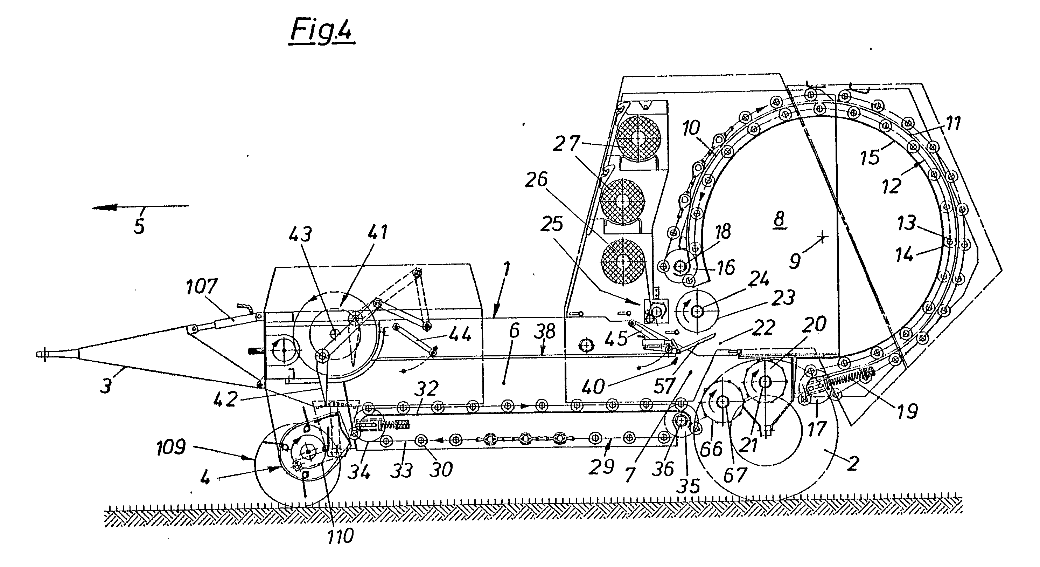

Durch die Wiederaufnahme des Antriebs von Bodenförderer 29 und Übergangsförderer 66 wird nun schnell und ohne wesentiche Verformung oder Zwischenpressung das hochverdichtete Erntegutpaket aus dem Form- und Preßkanal 6 in die Wickelkammer 8 überführt, und dabei befindet sich die Aufsammelpresse in einer Betriebsstellung ihrer Teile, wie sie in Fig. 4 veranschaulicht ist. Nach Herausfördern des hochverdichteten Gutpaketes kann der Niederhalter 38 in seine untere Ausgangsstellung zurückkehren, sofern der Druck des nachfolgend aufgenommenen und geförderten Erntegutes im Form- und Preßkanal 6 dem nicht entgegenwirkt. In diesem Falle belastet der Niederhalter 38 das nachfolgend durch den Preß- und Formkanal 6 geförderte Erntegut von oben her mit der Wirkung einer Vorverdichtung, welche die Verdichtung des Erntegutes in der Wickelkammer 8 begünstigt. Sobald nun in der Wickelkammer 8 wieder ein fertiger Rundballen gebildet ist, wiederholt sich der vorstehend beschriebene Zyklus erneut.

**Ansprüche**

1. Landwirtschaftliche Aufsammelpresse zum Bilden von Rundballen aus Erntegut in einer zum rückseitigen Auswerfen eines fertigen Rundballens aufklappbaren, mit einem Umfangsförderer (12) und im Bodenbereich mit einer Preßwalze (20) versehenen Wickelkammer (8), einer Aufsammelvorrichtung (4), einem sich an diese anschließenden und sich bis zu einer Einlaßöffnung (22) der Wickelkammer (8) erstreckenden, in Speicherphasen des Pressenbetriebs Erntegut sammelnden Speicherraum (6) mit einem dessen Bodenfläche (28) einnehmenden Bodenförderer (29), einer Vorrichtung (40) zum wahlweisen Unterbrechen und Freigeben eines Gutüberganges vom Speicherraum (6) zur Wickelkammer (8), und einer Vorrichtung (25;26) zum Einwickeln eines fertigen Rundballens in Bindematerial in der Wickelkammer (8), **dadurch gekennzeichnet**, daß der Speicherraum (6) als flacher Form- und Preßkanal (6) für das in Speicherphasen des Pressenbetriebs eingeförderte Erntegut ausgebildet ist, der bei veränderlicher Höhe einen über seine Länge im wesentlichen gleichbleibenden Querschnitt aufweist.

2. Aufsammelpresse nach Anspruch 1, **dadurch gekennzeichnet**, daß der Speicherraum (6) oberseitig von einem Niederhalter (38) begrenzt ist, der dem Bodenförderer (29) parallel im Abstand gegenüberliegt und gegen eine Rückstellkraft aus einer unteren Ausgangsstellung in eine obere Endstellung parallelbeweglich abgestützt ist.

3. Aufsammelpresse nach Anspruch 3, **dadurch gekennzeichnet,**, daß die Ausgangs- und die Endstellung des Niederhalters (38) durch Anschläge (54;55) definiert sind.

4. Aufsammelpresse nach Anspruch 2 oder 3, **dadurch gekennzeichnet,** daß der Niederhalter (38) an Paaren von Parallellenkern (44;45) aufgehängt ist.

5. Aufsammelpresse nach einem der Ansprüche 2 bis 4, **dadurch gekennzeichnet,** daß der Niederhalter (38) durch einen die Rückstellkraft aufbringenden Kraftspeicher (56) in seine Ausgangsstellung gedrückt ist.

6. Aufsammelpresse nach Anspruch 5, **dadurch gekennzeichnet,** daß der Kraftspeicher (56) von in ihrer Zugkraftwirkung einstellbar abgestützte Zugfedern (56) gebildet ist.

7. Aufsammelpresse nach einem der Ansprüche 2 bis 6, **dadurch gekennzeichnet,** daß der Niederhalter (38) parallel zur Förderrichtung (50) des Erntegutes im Speicherraum (6) ausgerichtete, im Abstand horizontal nebeneinander angeordnete und durch Querstreben (51) zu einer Einheit verbundene Längsschienen (52) als Begrenzungselemente aufweist.

8. Aufsammelpresse nach einem der Ansprüche 1 bis 7, **dadurch gekennzeichnet,** daß die Trennvorrichtung (40) zum wahlweisen Unterbrechen und Freigeben des Gutüberganges vom Speicherraum (6) zur Wickelkammer (8) von einem klappbar abgestützten Verschlußrechen (57) gebildet ist.

9. Aufsammelpresse nach Anspruch 8, **dadurch gekennzeichnet,** daß der Verschlußrechen (57) am wickelkammerseitigen Ende des Niederhalters (38) an diesem um eine nahe dessen Unterseite angeordnete, horizontale Querachse (58) begrenzt schwenkbar gelagert ist.

10. Aufsammelpresse nach Anspruch 9, **dadurch gekennzeich net,** daß der Verschlußrechen (57) mittels eines Krafthebers (59) aus seiner Freigabestellung in seine Schließstellung klappbar und in der Schließstellung durch den Kraftheber (59) arretierbar ist.

11. Aufsammelpresse nach Anspruch 10, **dadurch gekennzeichnet,** daß die Arretierung des Verschlußrechens (57) durch den Kraftheber (58) mit einer die Schließkraft begrenzenden Überlastsicherung vereinigt ist.

12. Aufsammelpresse nach Anspruch 10 oder 11, **dadurch gekennzeichnet,** daß der Verschlußrechen (57) unter Vorlast eines ihn in seine Freigabestellung zu bewegen bestrebten Kraftspeichers (63) steht.

13. Aufsammelpresse nach einem der Ansprüche 10 bis 12, **dadurch gekennzeichnet,** daß Kraftheber (59) und der Kraftspeicher (63) auf einem an der Oberseite des Niederhalters (38) angebrachten Konsolträger (65) abgestützt sind.

14. Aufsammelpresse nach einem der Ansprüche 8 bis 13, **dadurch gekennzeichnet,** daß der Verschlußrechen (57) in seiner Schließstellung mit der Unterseite des Niederhalters 38) einen stumpfen Winkel von weniger als 180° und in seiner Freigabestellung mit der Unterseite des Niederhalters (38) einen stumpfen Winkel von mehr als 180° einschließt.

15. Aufsammelpresse nach einem der Ansprüche 1 bis 14, **dadurch gekennzeichnet,** daß zwischen dem der Wickelkammer (8) zugewandten Ende des Bodenförderers (29) des Speicherraumes (6) und der Preßwalze (20) der Wickelkammer (8) ein Übergangsförderer (66) vorgesehen ist, der der Förderrichtung des Erntegutes einen Schräganstieg aufprägt.

16. Aufsammelpresse nach Anspruch 15, **dadurch gekennzeichnet,** daß der Übergangsförderer (66) von einer der Preßwalze (20) der Wickelkammer (8) im Abstand parallel und höhenvermindert vorgeordneten, quergerichteten Förderwalze (66) gebildet ist.

17. Aufsammelpresse nach einem der Ansprüche 8 bis 16, **dadurch gekennzeichnet,** daß in seiner Schließstellung der Verschlußrechen (57) mit den freien Enden seiner Rechenzinken bis nahe an den Bodenförderer (29) oder den Übergangsförderer (66) heranreicht.

18. Aufsammelpresse nach einem der Ansprüche 8 bis 17, **dadurch gekennzeichnet,** daß der Verschlußrechen (57) in seiner Freigabestellung eine annähernd parallel zur Förderrichtung des Erntegutes im Übergangsbereich (7) vom Speicherraum (6) zur Wickelkammer (8) ausgerichtete Lage einnimmt.

19. Aufsammelpresse nach einem der Ansprüche 1 bis 18, **dadurch gekennzeichnet,** daß dem Speicherraum (6) an seinem Einlaßende ein Einschubförderer (41) in Gestalt eines Schwingkolbenförderers zugeordnet ist, dessen rechenförmiger Förderkolben bei seinem Förderhub eine im wesentlichen horizontale Schubbewegung ausführt und durch diese Erntegut von der Aufsammelvorrichtung (4) in das Einlaßende des Speicherraumes (6) einschiebt.

20. Aufsammelpresse nach einem der Ansprüche 1 bis 19, **dadurch gekennzeichnet,** daß der Bodenförderer (29) als rollengeführter Stabkettenförderer ausgebildet ist, dessen auf über die Förderbreite vorstehenden Enden der Querstäbe 30) gelagerten Rollen (31) im Bereich des Fördertrums Führungsmittel (32) und dessen Antriebsketten (33)Umlenkräderpaare (34;35) überlaufen.

21. Aufsammelpresse nach Anspruch 20, **dadurch gekennzeichnet,** daß die der Aufsammelvorrichtung (4) benachbarten Umlenkräder (34) als federbelastete Kettenspannräder und die dem Wikkelraum (8) benachbarten Umlenkräder (35) als Kettenantriebsräder ausgebildet sind.

22. Aufsammelpresse nach Anspruch 20 oder 21, **dadurch gekennzeichnet,** daß die Kettenantriebsräder (35) auf einer gemeinsamen Antriebswelle (36) angebracht sind.

23. Aufsammelpresse nach einem der Ansprüche 1 bis 22, **dadurch gekennzeichnet,** daß unter dem Bodenförderer (29) eine Bodenwanne (37) angeordnet ist.

24. Aufsammelpresse nach Anspruch 23, **dadurch gekennzeichnet,** daß die Bodenwanne (37) an ihrem vorderen Ende bis über die Umlenkräder (34) und an ihrem rückwärtigen Ende bis über Preßwalze (20) der Wickelkammer (8) hinaus vorgezogen ist.

25. Aufsammelpresse nach einem der Ansprüche 1 bis 24, **dadurch gekennzeichnet,** daß im Pressenbetrieb die Aufsammelvorrichtung (4), der Einschubförderer (41) für den Speicherraum (6) und die Preßwalze (20) der Wickelkammer ständig angetriebene Förderer bilden.

26. Aufsammelpresse nach einem der Ansprüche 1 bis 25, **dadurch gekennzeichnet,** daß der Bodenförderer (29) und der Übergangsförderer (66) einen mit dem Beginn des Einwickelns des fertigen Rundballens in das Bindematerial, insbesondere eine Bindenetzbahn, gemeinsam ausschaltbaren und unmittelbar vor dem Schließen der Wickelkammer (8) nach einem Auswerfen eines gebundenen Rundballens (68) gemeinsam wieder einschaltbaren Antrieb aufweisen.

27. Aufsammelpresse nach einem der Ansprüche 1 bis 26, **dadurch gekennzeichnet,** daß der Umfangsförderer (12) der Wickelkammer (8) einen unmittelbar beim oder nach dem Beginn des Öffnens der Wickelkammer (8) ab- und unmittelbar vor dem Schließen der Wickelkammer (8) wieder einschaltbaren Antrieb aufweist.

28. Aufsammelpresse nach einem der Ansprüche 1 bis 27, **dadurch gekennzeichnet,** daß der Bodenförderer (29) nach Abschalten seines Antriebs frei durch Erntegut mitnehmbar gelagert ist.

29. Aufsammelpresse nach Anspruch 28, **dadurch gekennzeichnet,** daß auf der Antriebswelle (36) des Bodenförderers (29) ein mit einem Klinkenfreilauf (96,97) versehenes Kettenrad (92) eines Kettentriebs (91) vorgesehen ist, dessen Kette ein fest auf der Antriebswelle (67) des Übergangsförderers (66) angeordnetes Kettenrad umläuft.

30. Aufsammelpresse nach einem der Ansprüche 27 oder 29, **dadurch gekennzeichnet,** daß die Mitnahmebewegung des Bodenförderers (29) nach Abschalten des Antriebs bremsbar ist.

31. Aufsammelpresse nach Anspruch 30, **dadurch gekennzeichnet,** daß zum Bremsen des Bodenförderers (29) auf dessen Antriebswelle (36) eine Bremsvorrichtung (103,104) angebracht ist.

32. Aufsammelpresse nach einem der Ansprüche 1 bis 31, **dadurch gekennzeichnet,** daß eine vordere zentrale, insbesondere mit der Zapfwelle eines Zugfahrzeugs kuppelbare Antriebswelle (70) vorgesehen ist, die an ihrem einen Ende über einen Kettentrieb (71) die Aufsammelvorrichtung (4) antreibt und über einen Kettentrieb (75) an ihrem anderen Ende ein auf einer Zwischenantriebswelle (77) frei drehbar gelagertes Doppelkettenrad (78) treibt, das über eine Kupplung (82) mit der Zwischenantriebswelle (77) in Antriebsverbindung bringbar ist, wobei die Kupplung (82) über Betätigungsmittel (83,84,85) durch den klappbaren Teil der Wickelkammer (8) schaltbar ist.

33. Aufsammelpresse nach Anspruch 32, **dadurch gekennzeichnet,** daß das Doppelkettenrad (78) über einen weiteren Kettentrieb (79) ein frei auf der Antriebswelle (67) des Übergangsförderers (66) gelagertes und mit dieser über eine Kupplung (87) in Antriebsverbindung bringbares Kettenrad (80) sowie ferner ein fest auf der Antriebswelle (21) der Preßwalze (20) der Wickelkammer (8) angeordnetes Kettenrad (81) antreibt.

34. Aufsammelpresse nach Anspruch 33, **dadurch gekennzeichnet,** daß die Kupplung (87) für die Ein- und Abschaltung des Antriebs des Übergangsförderers (66) ein mittels eines fernbetätigbaren Krafthebers (90) aus einer Antriebsverbindungsstellung mit dem Kettenrad (80) auf der Antriebswelle (67) in eine Bremseingriffsstellung verschiebbares Kupplungsstück umfaßt, dessen dem Kettenrad (80) abgewandte Seite einen Bestandteil einer Bremsvorrichtung (99) bildenden Bremskörper (100) trägt, der mit einem auf der Antriebswelle (67) angeordneten Gegenkörper (98) der Bremsvorrichtung (99) in Bremseingriff bewegbar ist.

35. Aufsammelpresse nach Anspruch 34, **dadurch gekennzeichnet,** daß der Gegenkörper von einer pendelnd auf der Antriebswelle aufgehängten Druckplatte (98) gebildet ist, die in Bremseingriff mit dem Bremskörper (100) über einen Hebel die Bremsvorrichtung (103,104) für den Bodenförderer (29) betätigt.

36. Aufsammelpresse nach einem der Ansprüche 31 bis 35, **dadurch gekennzeichnet,** daß die Zwischenantriebswelle (77) auf ihrem ihrer Kupplung (82) abgewandten Ende über einen Kettentrieb (86) in ständiger Antriebsverbindung mit einer Antriebswelle (18) des Umfangsförderers (12) der Wickelkammer (8) sowie der Antriebswelle (24) einer Abweisförderwalze (23) steht, welche die Einlaßöffnung (22) der Wickelkammer (8) oberseitig begrenzt und in gleicher Drehrichtung wie die Antriebswelle (18) des Umfangförderers (12) der Wickelkammer (8) umläuft.

37. Aufsammelpresse nach einem der Ansprüche 1 bis 36, **dadurch gekennzeichnet,** daß die Aufsammelvorrichtung (4) dem Speicherraum (6) fest vorgeordnet und mit einer Bodenabtastvorrichtung (109) versehen ist, und daß eine um eine horizontale Querachse (106) auf und ab schwenkbare Zugdeichsel (3) vorgesehen ist, die durch einen hydraulischen, an einen Druckspeicher für Hydraulikmedium angeschlossenen Stellantrieb (107) abgestützt ist.

38. Aufsammelpresse nach Anspruch 37, **dadurch gekennzeichnet,** daß als Tastvorrichtung Tasträder (109) vorgesehen sind, die einen Teil der Abstützkräfte des vorderen Endes der Aufsammelpresse übernehmen, und daß der Anteil der übernommenen Abstützkräfte durch Vorgabe des Druckes in dem den Stellantrieb (107) beaufschlagenden Hydraulikmedium mittels eines einstellbaren Überdruckventils (118) wählbar ist.

Fig.1

Fig.2

Fig.3

Fig.4

_Fig.5_

_Fig.6_

EP 0 350 514 A1

Fig.7

EP 0 350 514 A1

Fig.8

Fig.9

Fig.10

_Fig.11_

## Fig.13

## Fig.12

EP 0 350 514 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,D | DE-A-2634638 (CLAAS)<br>* Seite 4, Zeile 13 - Seite 6; Figuren 1, 2 *<br>--- | 1, 2, 15 | A01F15/00 |
| A | GB-A-2003716 (K.H.D.)<br>* Seite 1, Zeile 126 - Seite 2, Zeile 80; Figur 1 *<br>--- | 1 | |
| A | DE-A-3313883 (CLAAS)<br>* Seite 6, Zeile 9 - Seite 9; Figur 1 *<br>----- | 1 | |
| | | | **RECHERCHIERTE SACHGEBIETE (Int. Cl.4)**<br><br>A01F |

Der vorliegende Recherchenbericht wurde für alle Patentansprüche erstellt

| Recherchenort | Abschlußdatum der Recherche | Prüfer |
|---|---|---|
| DEN HAAG | 13 MAERZ 1989 | VERMANDER R.H. |